**Europäisches Patentamt**

**European Patent Office**

**Office européen des brevets**

(19)

(11) Veröffentlichungsnummer: **0 233 504**

**A1**

(12) **EUROPÄISCHE PATENTANMELDUNG**

(21) Anmeldenummer: **87100883.5**

(22) Anmeldetag: **22.01.87**

(51) Int. Cl.⁴: **B60S 1/38**

(30) Priorität: **29.01.86 FR 8601205**

(43) Veröffentlichungstag der Anmeldung:
**26.08.87 Patentblatt 87/35**

(84) Benannte Vertragsstaaten:
**AT DE ES FR GB GR IT NL SE**

(71) Anmelder: **PAUL JOURNEE S.A.**
**39, Avenue Marceau**
**F-92400 Courbevoie(FR)**

(72) Erfinder: **Journée, Maurice**
**Le Bois Hédouin**
**F-60240 Reilly(FR)**

(74) Vertreter: **Patentanwaltsbüro Cohausz &**
**Florack**
**Postfach 14 01 47**
**D-4000 Düsseldorf 1(DE)**

(54) **Scheibenwischer mit geringem Strömungswiderstand.**

(57) Die Erfindung bezieht sich auf einen Scheibenwischer in Form eines verformbaren Waagebalkensystems (1), an dem ein Wischblatt (6) befestigt ist und das umfaßt einen Hauptbalken (2), drehbar befestigt am Ende eines Wischarms, der zu einer Pendelbewegung angetrieben werden kann, bei der die aktive Wischphase die Hin-Phase dieser Pendelbewegung ist; das verformbare Waagebalkensystem (1) umfaßt Neben-oder Zwischenbalken (4, 5) mit unmittelbarer oder mittelbarer Anlenkung an den Hauptbalken (2).

Der erfindungsgemäße Wischer ist dadurch gekennzeichnet, daß der Hauptbalken (2) und mindestens bestimmte Nebenbalken (4) ein asymmetrisches Profil haben, das im Sinne der Hinbewegung des Wischers eine Vorderfläche (7, 10) aufweist, die um etwa 45° in bezug auf die zu wischende Fläche geneigt ist und mit dieser im Sinne der Hinbewegung konvergiert, wobei die Hinterfläche (9, 11) des Profils mit der Vorderfläche (7, 10) einen spitzen Winkel bildet.

Anwendung in der Automobilindustrie.

Fig. 2
Fig. 4
Fig. 3

EP 0 233 504 A1

## SCHEIBENWISCHER MIT GERINGEM STRÖMUNGSWIDERSTAND

Die Erfindung bezieht sich auf einen Scheibenwischer, gebildet durch eine verformbare Kontruktion (Waagebalkensystem), an der ein Wischblatt befestigt ist, wobei diese verformbare Konstruktion umfaßt einen Hauptbalken, drehbar befestigt am Ende eines Wischarms, der zu einer Pendelbewegung, d. h. abwechselnd hin und her, angetrieben werden kann, bei der die aktive Wischphase die Hin-Phase der Pendelbewegung darstellt; dabei umfaßt die verformbare Konstruktion Neben-oder Zwischenbalken, die unmittelbar oder mittelbar an den Hauptbalken angelenkt sind.

Die bekannten Scheibenwischer haben im allgemeinen eine im wesentlichen symmetrische Konstruktion in bezug auf eine mittlere Längsebene. Diese symmetrische Konstruktion berücksichtigt nicht die unterschiedliche Rolle, die vom Wischer in der Hin-Phase und in der Her-Phase seiner Pendelbewegung übernommen wird.

Bei hoher Geschwindkeit des Fahrzeugs jedoch neigt der Wischer dazu, durch Strömungskräfte abgehoben zu werden, wodurch die Wischgüte nachteilig beeinflußt wird. Es ist vorgeschlagen worden, der verformbaren Konstruktion des Wischers ein strömungsgünstigeres Profil zu geben, doch die erzielten Ergebnisse sind mittelmäßig.

Ziel der Erfindung ist es deshalb, das Verhalten der Scheibenwischer bei hoher Fahrzeuggeschwindkeit durch ein neues Profil mindestens eines Teils der verformbaren Konstruktion zu verbessern, das ein Anpressen des Wischers während der Hin-Phase seiner Pendelbewegung gewährleistet.

Zu diesem Zweck ist der erfindungsgemäße Wischer dadurch gekennzeichnet, daß der Hauptbalken und mindestens gewisse Nebenbalken ein asymmetrisches Profil haben, das im Sinne der Hinbewegung des Wischers eine Vorderfläche aufweist, die im wesentlichen um 45° in bezug auf die zu wischende Fläche und dazu konvergierend geneigt ist, wobei die hintere Fläche des Profils mit der Vorderfläche einen spitzen Winkel bildet.

Die Vorderfläche bildet eine Angriffs-oder Anströmfläche im Hinbewegungssinne des Wischers, und die Strömungskräfte, die auf die verformbare Konstruktion im Verlauf der Hinbewegung einwirken, drücken den Wischer tendenziell an die zu wischende Fläche, wobei diese Tendenz durch den durch die hintere Fläche gebildeten spitzen Winkel noch betont wird.

In einer Ausführungsform beträgt der Winkel zwischen der vorderseitigen und rückseitigen Fläche ca. 45°. Die vordere und die hintere Fläche können über eine geneigte Abströmfläche, vorzugsweise eine bombierte, miteinander verbunden werden.

Der erfindungsgemäße Wischer hat eine asymmetrische Konstruktion, die bewirkt, daß er, wenn er für ein Fahrzeug mit Linkslenkung vorgesehen ist, in gleicher Stellung nicht an einem Fahrzeug mit Rechtslenkung montiert werden kann, bei dem die Hin-Phase umgekehrt ist.

Um diesem Nachteil abzuhelfen, kann vorgesehen werden, daß die Befestigung des Hauptbalkens am pendelnden Wischarm umkehrbar ist, wodurch die Möglichkeit geschaffen wird, der Anströmkante durch einfache Umkehr des großen Waagebalkens die richtige Lage zu geben.

Die Erfindung wird besser verständlich beim Lesen der folgenden Beschreibung unter Bezugnahme auf die beigeheftete Zeichnung, in der:

-Figur 1 eine Seitenansicht eines Scheibenwischers nach einem Ausführungsbeispiel der Erfindung ist;

-Figur 2 ist eine Draufsicht des Hauptbalkens und der Zwischenbalken des Wischers in Figur 1;

-Figur 3 ist eine Schnittansicht entlang der Line A-A in Figur 2, und

- Figur 4 ist eine Schnittansicht entlang der Linie B-B in Figur 2.

Der Wischer besteht aus einem Oberteil 1, bestehend aus einem Hauptbalken 2 mit einer Achse 3 für dessen Anlenkung an das Ende eines Wischarms (nicht dargestellt). Zwischenbalken 4 sind an jedem Ende des Hauptbalkens 2 angelenkt, und ein kleiner Balken 5 ist an das untere Ende eines jeden Zwischenbalkens 4 angelenkt. Die äußeren Enden der Zwischenbalken 4 und die beiden Enden eines jeden kleinen Balkens 5 tragen ein Wischblatt 6.

Das durch die Waagebalken 2, 4, 5 gebildete System kann sich verformen, um dem Wischblatt 6 ein dauerndes Anschmiegen an das Profil der zu wischenden Fläche, beispielsweise die Windschutzscheibe eines Kraftfahrzeugs, im Verlauf seiner Pendelbewegung über diese Fläche zu ermöglichen. Diese Bewegung wird durch den Wischarm mitgeteilt, der den Zusammenbau des Wischers gegen die zu wischende Fläche über Federmittel drückt, die auf das Ende des Arms eine Kraft anwenden, die senkrecht zu der zu wischenden Fläche wirkt.

Die soeben beschriebene Konstruktion ist gut bekannt und kann verschieden Formen annehmen, wobei insbesondere die Zahl der Befestigungspunkte für das Wischblatt 6 variiert werden kann.

Im Verlauf der Verschiebung des Wischblatts auf der zu wischenden Fläche und zudem auch unter Berücksichtigung der Fahrzeuggeschwindigkeit ist der Scheibenwischer starken Strömungskräften ausgesetzt, die insbersondere auf die verformbare Konstruktion 1 einwirken. Die Komponenten dieser senkrecht zur zu wischenden Fläche wirkenden und sich davon wegbewegenden Kräfte wollen den Wischer gegen die Federkraft des Wischarms abheben, wodurch die Benutzung des Fahrzeugs bei hoher Fahrgeschwindigkeit in Regenzeiten stark eingeschränkt wird.

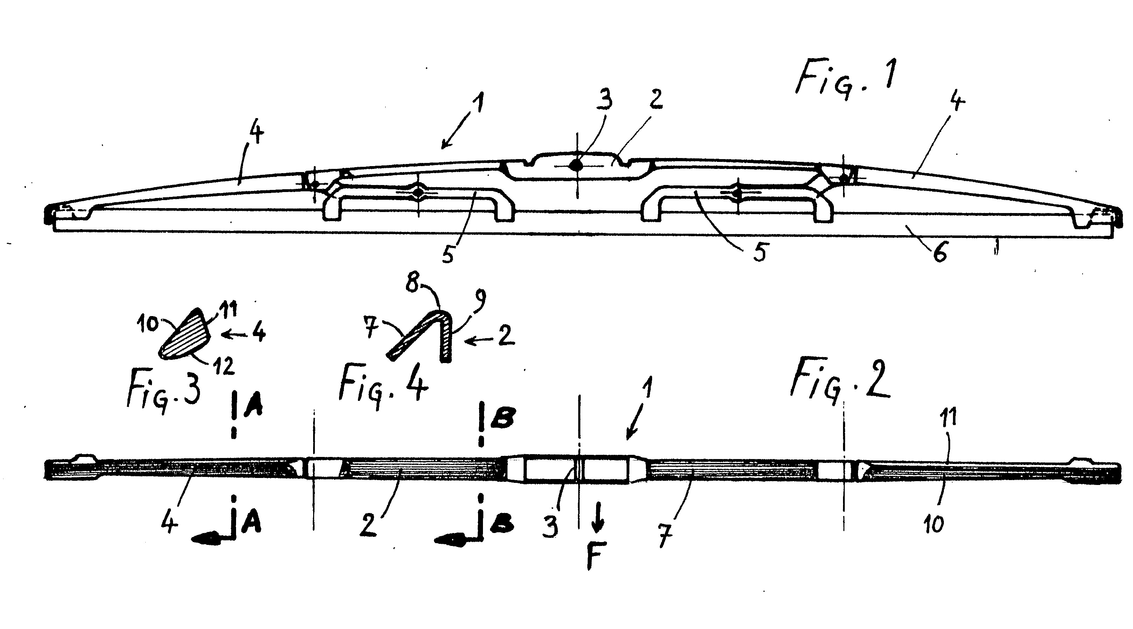

Um die Komponenten zum Abheben des Wischers zu verkleinern, sieht die Erfindung vor, mindestens gewissen Waagebalken des verformbaren Systems eine asymmetrische Form zu geben, bei der eine geneigte Vorderfläche eine Anströmkante für den Wischer bei dessen Hinbewegung (im Sinne des Pfeils F in Figur 2) in einer pendelnden Verschiebephase bildet. Der Hauptwaagebalken 2 wird in herkömnmlicher Weise angefertigt aus einem zugeschnittenen und tiefgezogenen Metallband und weist statt der allgemein gewählten Form eines umgekehrten U eine Vorderfläche 7 auf, die im wesentlichen um 45° geneigt und über eine Rundung 8 an die hintere Fläche 9 angeschlossen ist, die deshalb im wesentlichen senkrecht zu der zu wischenden Fläche steht.

Die Zwischenbalken 4 bestehen aus Kunststoff und weisen eine um im wesentlichen 45° geneigte Vorderfläche 10 sowie eine hintere Fläche 11 auf, die mit der Fläche 10 einen Winkel von etwas mehr als 55° bildet, wobei die beiden Flächen 10 und 11 über eine bombierte Abströmfläche 12 miteinander verbunden sind.

Um eine Montage des Wischers sowohl an Fahrzeugen mit Rechtslenkung als auch an solchen mit Linkslenkung zu ermöglichen, bei denen der Sinn F umgekehrt ist, sieht die Erfindung vor, daß der Wischer umkehrbar ist. Zu diesem Zweck ist im beschriebenen Beispiel die Anlenkachse 2 in einer syymetrischen Aussparung untergebracht, die es ermöglicht, das Ende des Wischarms von beiden Seiten aus einzusetzen, d. h. daß der Arm die eine oder andere der beiden Wischerhälften überdeckt.

## Ansprüche

1. -Scheibenwischer in Form eines verformbaren Waagebalkensystems, an dem ein Wischblatt befestigt ist und das umfaßt einen Hauptbalken, drehbar am Ende eines Wischarms befestigt, der zu einer Pendelbewegung angetrieben werden kann, bei der die aktive Wischphase die Hin-Phase der Pendelbewegung ist, dabei umfaßt das verformbare System unmittelbar oder mittelbar an den Hauptbalken angelenkte Neben-oder Zwischenbalken und ist dadurch gekennzeichnet, daß der Hauptbalken (2) und mindestens bestimmte Nebenbalken (4) ein asymmetrisches Profil haben, das eine Vorderfläche (7, 10) im Sinne der Hinbewegung des Wischers aufweist, die im wesentlichen um 45° in bezug auf die zu wischende Fläche geneigt ist und mit dieser konvergiert, wobei die hintere Fläche (9, 11) dieses Profils mit der Vorderfläche (7, 10) einen spitzen Winkel bildet.

2. -Scheibenwischer nach Anspruch 1, dadurch gekennzeichnet, daß der Winkel zwischen der Vorderfläche (7, 10) und Hinterfläche (9, 11) ca. 45° beträgt.

3. -Scheibenwischer nach einem der vorhergehenden Ansprüche, dadurch gekennzeichnet, daß die vordere Fläche (10) und die hintere Fläche - (11) über eine geneigte, vorzugsweise bombierte Abströmfläche (12) miteinander verbunden sind.

4. -Scheibenwischer nach einem der vorhergehenden Ansprüche, dadurch gekennzeichnet, daß die Befestigung des Hauptbalkens (2) am Pendelarm umkehrbar ist.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 8, Nr. 128, (M-302)[1565], 14. Juni 1984; & JP-A-59 32 545 (NIPPON DENSO K.K.) 22.02.1984 * Insgesamt * | 1,3 | B 60 S 1/38 |
| | --- | | |
| A | US-A-2 814 820 (ELLIOTT et al.) * Spalte 2, Zeile 22 - Spalte 3, Zeile 29; Figuren 1-6 * | 1 | |
| | --- | | |
| A | AU-A- 37 728 (VON SCHASSEN) (1972 * Seite 4, Zeilen 24-29; Figur 4 * | 1 | |
| | ----- | | |

|  | RECHERCHIERTE SACHGEBIETE (Int. Cl.4) |
|---|---|
| | B 60 S |

Der vorliegende Recherchenbericht wurde für alle Patentansprüche erstellt.

| Recherchenort | Abschlußdatum der Recherche | Prüfer |
|---|---|---|
| DEN HAAG | 07-05-1987 | VERLEYE J. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82